# DEMANDE DE BREVET EUROPEEN

(11) **EP 2 452 897 A1**
(43) Date de publication de la demande: **16.05.2012**
(21) Numéro de dépôt: 11306456.2
(22) Date de dépôt: 09.11.2011
(51) Int. Cl.: B65F 1/12, B65F 1/14

(54) **Installation de collecte sélective de déchets en apport volontaire**

(30) Priorité: 12.11.2010 FR 1059320
(71) Demandeur: Triolôgis, 42390 Villars (FR)
(72) Inventeur: Nave, René, 42390 VILLARS (FR); Nave, Christophe, 43600 LES VILLETTES (FR); Auge, Jérôme, 01330 BIRIEUX (FR); Rascle, Jérôme, 42000 SAINT ETIENNE (FR); Chemarin, Jean-François, 42120 LE COTEAU (FR)
(74) Mandataire: Dupuis, François

(57) **Abrégé**

Selon l'invention, l'installation (1) de collecte sélective de déchets en apport volontaire comprend une structure autonome enterrée s'intégrant dans un paysage extérieur (2), ladite structure autonome étant constituée d'une plateforme supérieure (3), d'un cuvelage d'étanchéité et d'un fond (4), ledit fond (4) étant agencé avec des moyens réceptionnant une ou plusieurs cuves (6), de réception des déchets, d'une borne de collecte et de vidage, notamment une borne de tri (9) comprenant un boitier de commande et de gestion. Lesdites cuves (6) sont disposées sur des moyens permettant de déplacer et de positionner dans un plan horizontal n'importe quelle desdites cuves (6) sous ladite borne de tri (9) ou bien sous lesdits moyens d'extraction desdites cuves (6), au moyen dudit boitier de commande et de gestion, ladite plateforme supérieure (3) étant située au niveau du sol, et pouvant être aménagée pour un usage public. Lesdits moyens d'extraction sont constitués d'une trappe (10) comprenant une face (10a) en regard des cuves (6), ladite face (10a) comprend des éléments (12) aptes à coopérer avec des moyens de prise et de préhension agencés sur chacune des cuves (6) à vider, lorsque ladite cuve (6) à vider se déplace sous ladite trappe (10) d'extraction, ladite trappe (10) d'extraction comprend de plus un dispositif de commande d'extraction (13) par lequel, lorsque l'on exerce une force de traction sur celui-ci, la trappe (10) d'extraction se soulève et permet ainsi d'extraire ladite cuve (6) à vider par la coopération desdits éléments (12) avec lesdits éléments de préhension (8).

## Description

### ARRIERE PLAN DE L'INVENTION

### DOMAINE TECHNIQUE DE L'INVENTION

La présente invention se rattache au secteur technique du traitement des déchets et gravats dans des zones publiques, hors habitation en particulier et par apport volontaire.

### DESCRIPTION DE L'ART ANTERIEUR

De nos jours, le triage des déchets d'origine alimentaire, végétale, de produits en verre ou en matière plastique, et autres détritus de toute nature, fait l'objet d'action de sensibilisation très importante auprès des consommateurs pour assurer, en mettant à disposition des équipements et containers, une meilleure gestion des déchets précités.

Il est bien connu de disposer aussi bien sur la voie publique que dans les sous-sols d'immeubles des containers affectés à tel ou tel type de déchets en requérant au consommateur une action de vigilance et de civisme.

Deux des inventeurs de la présente demande ont déjà travaillé sur des solutions de traitement de déchets installées dans un immeuble et ont déposé à titre personnel notamment les demandes de brevets français N° FR 2 935 367 et N° FR 2 807 063. Les solutions techniques sont satisfaisantes, mais on se heurte à des difficultés pour agencer les immeubles en rénovation avec un tel concept. Dans la présente demande, les inventeurs se sont penchés, plus particulièrement, sur une solution de traitement des déchets installée dans des zones publiques, à l'extérieur des habitations en supprimant les contraintes techniques et juridiques des immeubles en copropriétés.

De manière générale, les détritus de tous genres, ou bien d'une nature spécifique, sont traités au moyen de gros containers spécialisés dans la collection d'un type de déchet particulier ou dans la collection de détritus de tous genres.

Ces containers que l'on trouve dans une déchetterie par exemple ou bien ceux sur la voie publique sont encombrants et occupent une emprise foncière non négligeable. De plus ils sont souvent nuisibles à l'environnement par leur pollution esthétique, sonore et olfactive. Ces containers de l'art antérieur comprennent également une capacité de stockage limitée et une ouverture permettant le chargement des déchets assez réduite. En effet, pour les containers de collecte de détritus en verre par exemple, il est souvent nécessaire de décharger lesdits détritus un par un par le biais d'un hublot.

Pour conclure, ces dispositifs de traitements des déchets ne sont pas très attrayants et du fait des inconvénients précités, ne motivent pas le consommateur à les utiliser et présentent des limites d'utilisations.

A la connaissance des demandeurs, il n'existe pas de systèmes ou d'installations proprement dites satisfaisantes à ce jour, alors que l'acuité du problème posé demeure.

### DESCRIPTION DE L'INVENTION

La démarche des inventeurs a donc été de reconsidérer globalement le concept de l'existant en vue de proposer une solution satisfaisante, nouvelle et inventive répondant aux objectifs de rendre le plus discret possible l'installation dans son environnement extérieur tout en assurant les fonctions recherchées de collecte et d'évacuation. Et plus particulièrement faciliter l'insertion des déchets à collecter, ne pas être encombrant, occuper une emprise foncière négligeable par rapport à la capacité importante de collecte des déchets de l'installation, ne pas polluer l'environnement que ce soit esthétiquement, auditivement ou lié à l'odeur dégagée par ladite installation.

L'installation sera attrayante dans un environnement extérieur sans nuisance ce qui motivera les consommateurs à l'utiliser et ce qui permettra d'effectuer de manière avantageuse un tri sélectif des déchets.

Ce but est atteint conformément à l'invention au moyen d'une installation de collecte de déchets en apport volontaire, caractérisée en ce qu'elle comprend une structure autonome enterrée s'intégrant dans un paysage extérieur, ladite structure autonome étant constituée d'une plateforme supérieure, d'un cuvelage d'étanchéité et d'un fond, ledit fond étant agencé avec des moyens réceptionnant une ou plusieurs cuves, de réception des déchets, autorisant leur présentation en fonction des informations recueillies sur une borne de collecte et de vidage, notamment une borne de tri apparente, ladite plateforme supérieure étant située au niveau du sol, et pouvant être aménagée pour un usage public, ladite borne de tri apparente permettant de décharger les déchets dans la ou lesdites cuves et ladite structure comprenant des moyens autorisant l'extraction verticale desdites cuves hors de la structure autonome et leur remise en position, pour leur vidage.

De cette manière, on obtient une installation de collecte de déchets en apport volontaire occupant une emprise foncière négligeable par rapport à sa capacité de stockage. Cette installation étant enterrée, l'odeur dégagée par celle-ci est largement réduite voire nulle. Et les caractères esthétique et auditif sont nettement améliorés car la plus grosse partie de l'installation, qui comprend les déchets, n'est pas visible. Cette installation comprenant une plateforme supérieure autorisant le roulement de véhicules motorisés, cela facilite le dépôt de détritus.

Pour résoudre le problème du tri sélectif et de la répartition des déchets vers dans les cuves appropriées, dans l'installation de collecte selon l'invention, ladite borne de tri comprend un boitier de commande et de gestion et en ce que la ou lesdites cuves sont disposées sur des moyens permettant de déplacer et de positionner dans un plan horizontal n'importe quelle desdites cuves sous ladite borne de tri ou bien sous lesdits moyens d'extraction desdites cuves, au moyen dudit boitier de commande et de gestion.

Pour résoudre le problème de vidage des cuves pleines, dans l'installation de collecte selon l'invention, lesdits moyens d'extraction verticale desdites cuves sont constitués d'une trappe d'extraction comprenant une face en regard des cuves, ladite face comprenant des éléments formant crochets aptes à coopérer avec des moyens de prise et de préhension agencés sur chacune des cuves à vider, lorsque ladite cuve à vider se déplace sous ladite trappe d'extraction, ladite trappe d'extraction comprenant de plus un dispositif de commande d'extraction par lequel, lorsque l'on exerce une force de traction sur celui-ci, la trappe d'extraction se soulève et permet ainsi d'extraire ladite cuve à vider par la coopération desdits éléments formant crochets avec lesdits éléments de préhension.

Avantageusement, dans l'installation de collecte selon l'invention, ledit dispositif de commande d'extraction comprend une extrémité supérieure débordant vers l'extérieur de ladite structure autonome et une extrémité inférieure débordant vers l'intérieur de ladite structure, ladite extrémité supérieure comprenant des moyens de préhension et de commande de celle-ci et ladite extrémité inférieure comprenant une base et un ressort agencé entre ladite base et ladite face, ladite base comprenant des doigts aptes se déplacer et pénétrer dans des orifices que comprend lesdits éléments de préhension de ladite cuve à vider, au moyen de la compression du ressort lorsqu'une force de traction est exercée sur ledit dispositif de commande d'extraction.

De préférence, dans l'installation de collecte selon l'invention, lesdits moyens permettant de déplacer n'importe quelle desdites cuves se présentent sous la forme d'un carrousel motorisé permettant d'entrainer la rotation, au moyen dudit boitier de commande et de gestion, desdites cuves autour d'un axe longitudinal perpendiculaire à ladite plateforme supérieure, chaque cuve étant destinée à recevoir un type de déchets spécifique tel du verre ou bien du plastique.

De cette manière, le déplacement des cuves sous ladite borne de tri se fait d'une manière simple et automatisée.

Pour résoudre le problème de savoir quand les cuves sont pleines pour ainsi avertir le service de maintenance de l'installation de collecte de déchets pour les vider, dans l'installation de collecte selon l'invention, ladite plateforme supérieure comprend des moyens de contrôle du remplissage desdites cuves.

Avantageusement, dans l'installation de collecte selon l'invention, ladite borne de tri apparente est agencée sur la plateforme supérieure de telle sorte que lors du déplacement desdites cuves, ladite borne de tri est située au dessus et au centre desdites cuves.

De cette manière, lors du déchargement des déchets par l'intermédiaire de la borne de tri, lesdits déchets tombent au centre de la cuve. Ainsi, la capacité de stockage de la cuve est utilisée de façon optimale et on évite également les effets de contrepoids générés par les déchets, lors de l'extraction de ladite cuve.

Afin de garantir une sécurité d'utilisation optimale, dans l'installation de collecte selon l'invention, ladite plateforme supérieure comprend un volet étanche de sécurité, composé d'une ou plusieurs parties, agencé de manière pivotante latéralement ou verticalement par rapport à ladite plateforme supérieure et apte à passer d'une position de repos sensiblement verticale, à l'intérieur du cuvelage, à une position de verrouillage horizontale dans laquelle ledit volet étanche de sécurité vient obturer l'ouverture formée lorsqu'une desdites cuves est extraite pour son vidage et se trouve à l'extérieur de l'installation.

De cette manière, on évite que tout objet ou personne tombe dans le cuvelage de la structure lorsqu'une cuve est en cour de vidage. En effet, un objet présent en dessous de la cuve pourrait bloquer l'installation ou bien une personne pourrait se blesser en tombant ou être blessée par le retour de la cuve.

Le vidage s'effectue à l'aide de tous véhicules appropriés incluant un moyen de levage et de manutention des cuves pour permettre leur prise, leur élévation, leur sortie de l'installation, leur vidage puis leur réinsertion dans ladite installation

De préférence, dans l'installation de collecte selon l'invention, ledit fond desdites cuves canalise des déchets liquides jusqu'à un bac de rétention pour que lesdits déchets liquides soient ensuite évacués par une pompe.

De cette manière, les déchets liquides ne restent pas pour polluer le fond de la structure. L'odeur dégagée par ladite installation est ainsi réduite et l'hygiène améliorée. Il est possible de disposer également dans l'installation de moyens désodorisant et ou désinfectant.

Pour résoudre le problème de déchargement de déchets encombrant, pour une utilisation toujours plus sécuritaire et pour faciliter l'entretien de ladite installation de collecte selon l'invention, ladite installation comprend un accès spécifique « gros volumes », type galerie technique, agencé au dos de ladite borne de tri, permettant de décharger des déchets très encombrant. Afin de permettre un accès direct aux services de secours et aux opérateurs chargés de l'entretien ou pour une opération de débouchage par exemple. Ledit accès spécifique peut-être agencé entre le carrousel et la plateforme supérieure.

L'invention sera bien comprise, et d'autres caractéristiques et avantages de celle ci apparaîtront, en référence aux dessins schématiques annexés, représentant, à titre d'exemple non limitatif, une forme de réalisation préférée qu'elle concerne.

### BREVE DESCRIPTION DES FIGURES

La figure 1 est une vue schématique en perspective, partiellement coupée, représentant l'installation de collecte de déchets selon l'invention, enterrée dans un terrain.
La figure 2 est une vue schématique en perspective de l'installation de collecte de déchets selon l'invention, représentée sans le cuvelage et avec une cuve de réception de déchets extraite.
La figure 3 est une vue schématique en perspective représentant la trappe d'extraction de la plateforme supérieure de la présente invention.
La figure 4 est une vue schématique en perspective représentant le dispositif de commande et d'extraction permettant d'exercer une force de traction sur la trappe d'extraction afin d'extraire une cuve.
La figure 5 est une vue schématique en perspective similaire à la figure 3 mais ladite plaque d'extraction comprenant le dispositif de commande et d'extraction permettant d'exercer une force de traction monté sur elle.
La figure 6 est une vue schématique représentant la plateforme supérieure de la structure autonome de la présente invention, vue de dessus.
La figure 7 est une vue similaire à la figure 6, ladite plateforme supérieure étant représentée en perspective.
La figure 8 est une vue similaire à la figure 6, ladite plateforme supérieure étant représentée vue de côté.
La figure 9 est une vue schématique de dessus représentant le carrousel de la présente invention.
La figure 10 est une vue similaire à la figure 9, ledit carrousel étant représenté en perspective.
La figure 11 est une vue schématique représentant une cuve selon l'invention sans fond et vue de côté.
La figure 12 est une vue similaire à la figure 11, ladite cuve sans fond étant représentée en perspective.
La figure 13 est une vue similaire à la figure 12, ladite cuve étant représentée avec la partie de fond de la cuve en éclatée.

### DESCRIPTION DETAILLEE D'UN MODE DE REALISATION PREFERE DE L'INVENTION

Par simplification, les parties ou éléments d'une forme de réalisation qui se retrouvent de manière identique ou similaire dans une autre forme de réalisation seront identifiés par les mêmes références numériques et ne seront pas à nouveau décrits.

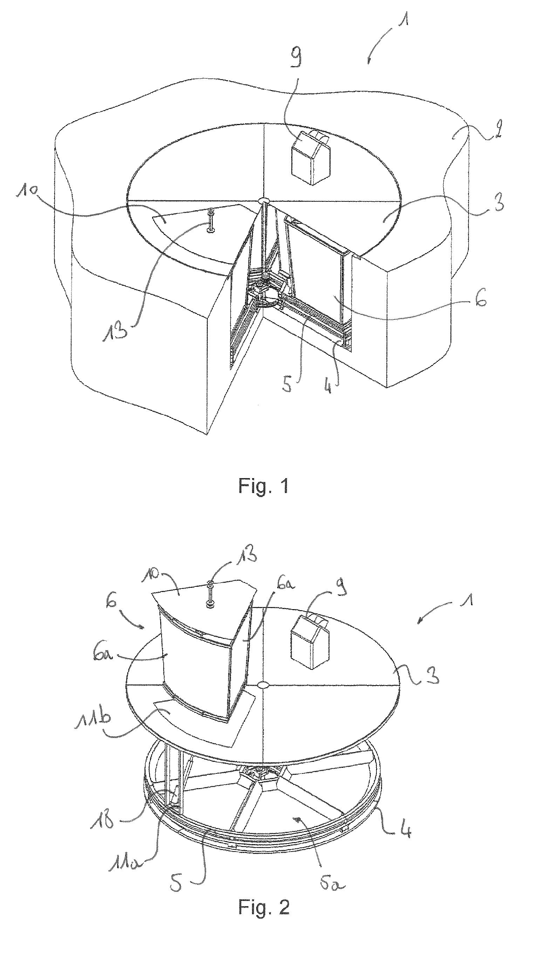

En référence aux figures 1 et 2, l'installation (1) de collecte de déchets en apport volontaire selon l'invention est constituée d'une structure autonome enterrée s'intégrant dans un paysage extérieur (2). Ladite structure autonome comprend une plateforme supérieure (3), un cuvelage d'étanchéité (non représenté) et un fond (4).

Le cuvelage d'étanchéité de ladite structure est agencé entre le fond (4) et la plateforme supérieure (3) et est réalisé notamment en béton ou toute autre matière étanche.

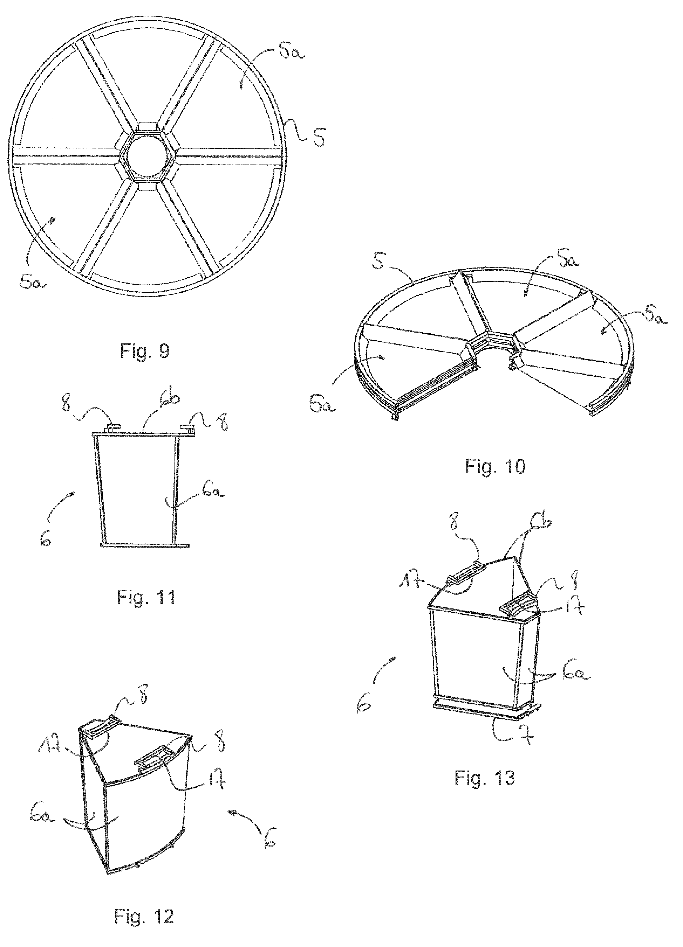

En référence aux figures 1, 2 et 9 à 12, le fond (4) est une plaque circulaire, notamment en béton ou en toute autre matière étanche.

Le fond (4) comprend un carrousel (5) motorisé comprenant une base tournante sur laquelle sont agencés plusieurs compartiments (5a). La pluralité de compartiments (5a) permet la réception de plusieurs cuves (6) de réception des déchets. Lesdits compartiments (5a) ont une forme correspondante à la forme du fond (7) des cuves (6) pour assurer leur centrage et positionnement. Le carrousel (5) est agencé sur ledit fond (4) de la structure autonome, de manière rotative dans le plan horizontal. Le carrousel (5) est de cette manière apte à tourner autour d'un axe perpendiculaire audit fond (4) de la structure autonome de manière à pouvoir faire tourner les cuves (6) qui sont posées dans les compartiments (5a) dudit carrousel (5).

Le fond (4) comprend également un bac de rétention (non représenté) de manière à pouvoir stocker des déchets liquides. Ces déchets liquides sont ensuite évacués à l'aide d'une pompe (non représentée).

La cuve (6) de réception des déchets est de forme trapézoïdale avec les bases du trapèze sensiblement arrondie. De cette manière, l'agencement de la pluralité de cuves (6) se présente sous la forme d'un cercle. Chaque cuve (6) est ainsi constituée de quatre parois latérales (6a) et d'un fond (7). Chaque cuve (6) reste ouverte sur le dessus, ce qui permet la réception des déchets. Chaque cuve (6) comprend de plus, agencés à ou près de son arête supérieure (6b) formée par la coopération des parois (6a) de chacune desdites cuves (6), deux éléments de préhension (8). Ces éléments de préhension (8) sont constitués par des tubes en acier de section carré ou autre. Ces éléments de préhension (8) sont fixés à chacune desdites cuves (6) et sont sous la forme par exemple d'un L inversé et permettent de soulever chacune des cuves (6) par un effort de traction exercé sur ces dits éléments de préhension (8) par d'autres moyens décrits ci-après.

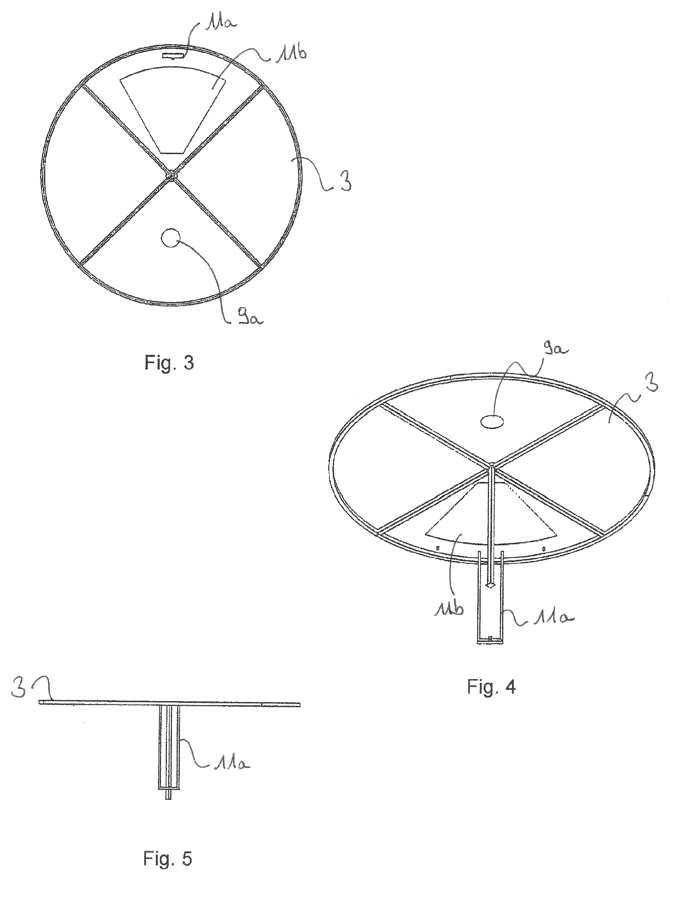

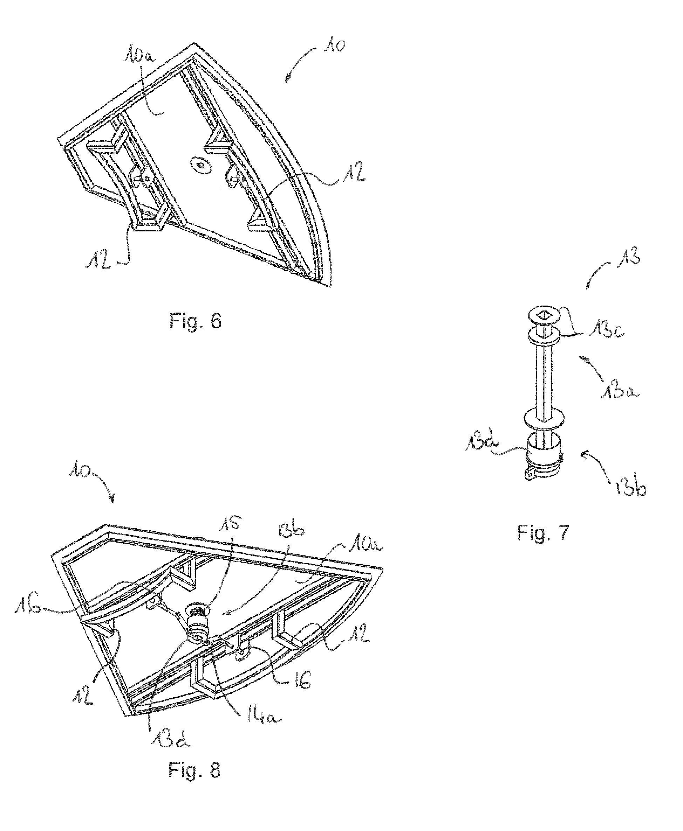

En référence aux figures 1 à 6, la plateforme supérieure (3) est par exemple de forme circulaire, ou autre, en appui étanche sur le cuvelage et se trouve au niveau du sol. Cette plateforme (3) intégrée dans l'environnement extérieur (2) comprend une borne de tri (9) apparente avec une ouverture (9a) située sous la borne de tri (9) permettant de décharger les détritus dans les cuves (6) correspondantes, une trappe (10) d'extraction verticale des cuves (6) et un volet (11) étanche de sécurité.

La borne de tri (9) apparente comprend un boitier de commande de l'installation étant agencé avec une ouverture et un réservoir destiné à recevoir des détritus à décharger. Le boitier de commande permet de sélectionner le type de déchets à décharger et commande ainsi la rotation du carrousel (5) qui emmène de ce fait la cuve (6) correspondante sélectionnée sous la borne de tri (9) apparente. Les détritus peuvent maintenant être déchargés dans la borne de tri (9). La borne de tri (9) ne comprend pas de fond et est agencée sur ladite ouverture (9a) que comprend la plateforme supérieure. Ainsi par l'actionnement du boitier de commande, l'ouverture (9a) s'ouvre pour laisser tomber les détritus dans la cuve (6) correspondante.

La trappe (10) d'extraction verticale des cuves (6), que comprend la plateforme supérieure (3), se présente sous la forme d'une trappe (10) de forme correspondante à une cuve (6), c'est-à-dire trapézoïdale. Cette trappe (10) comprend, sur sa face (10a) en regard des cuves (6), deux éléments (12) formant crochets se présentant sous la forme de L. Ces éléments (12) formant crochets sont identiques aux éléments de préhension (8) que comprend chaque cuve (6), mais de forme inversée, et sont ainsi aptes à coopérer avec ces dits éléments de préhension (8) pour prendre appui et soulever de manière verticale la cuve (6) correspondante. Ces éléments (12) formant crochets et ces éléments de préhension (8) coopèrent successivement lors de la rotation du carrousel (5) et donc des cuves (6). En effet, lorsqu'une cuve (6) arrive, par la rotation du carrousel (5), sous la trappe (10) d'extraction de cuve (6), les éléments (12) formant crochets se retrouvent positionnés juste en dessous des éléments de préhension (8) de ladite cuve (6) sélectionnée pour être vidée.

La trappe (10) d'extraction comprend de plus un dispositif de commande d'extraction (13) agencé en son centre. Ce dispositif (13) comprend une partie supérieure (13a) débordant vers l'extérieur de la structure et une partie inférieure (13b) débordant vers l'intérieur de la structure. Ladite partie supérieure (13a) comprend des moyens (13c) de préhension et de commande de celle-ci de manière à pouvoir exercer un effort de traction vertical sur ledit dispositif de commande d'extraction (13) pour pouvoir extraire par soulèvement vertical une cuve (6) lorsque les éléments de préhension (8) de ladite cuve (6) coopèrent avec les éléments (12) formant crochets de ladite trappe (10) d'extraction.

Un organe (14) de sécurité supplémentaire est agencé sur la trappe (10) d'extraction verticale de cuve. Cet organe (14) est composé de la partie inférieure (13b) du dispositif de commande d'extraction (13), d'un ressort (15) et deux tubes en acier formant des doigts (16). La partie inférieure (13b) du dispositif de commande d'extraction (13) comprend une base (13d) et ledit ressort (15) est agencé entre ladite base (13d) et ladite face (10a) en regard des cuves (6). Les doigts (16) de l'organe (14) de sécurité sont fixés à la base (13d) et sont agencés par un système de biellette (14a) de manière à ce que lorsque l'on exerce un effort de traction sur la partie supérieure (13a) du dispositif de commande d'extraction (13), le ressort (15) se comprime et ledit dispositif de commande d'extraction (13) se translate verticalement de quelques centimètres pour permettre aux doigts (16) de se déplacer horizontalement et de pénétrer, en assurant une fonction de verrouillage, dans des orifices (17) que comprennent les éléments de préhension (8) de ladite cuve (6). De cette manière, le dispositif de commande d'extraction (13) est apte à adopter deux positions. Une première position de repos dans laquelle le ressort (15) est détendu et les doigts (16) de l'organe de sécurité ne sont pas en engagement dans les orifices (17) des éléments de préhension (8). Et une deuxième position de verrouillage dans laquelle le ressort (15) est comprimé et les doigts (16) de l'organe (14) de sécurité sont en engagement dans les orifices (17) des éléments de préhension (8). La position de verrouillage est maintenue tout au long de l'extraction grâce au poids de la cuve (6). Le poids de la cuve (6) à vide est satisfaisant pour maintenir cette position de verrouillage. Lorsque l'extraction est terminée ainsi que le déchargement des détritus de toutes manières appropriées, la cuve (6) est remise dans sa position d'origine. Dans cette position, on n'exerce plus d'effort de traction sur le dispositif de commande d'extraction (13) qui revient alors dans sa position de repos et qui libère les doigts (16) des orifices (17).

Le volet (11) étanche de sécurité est agencé sur la plateforme supérieure (3) de la structure et comprend un châssis (11a) fixé à une extrémité à la plateforme supérieure (3) et à l'autre extrémité au cuvelage d'étanchéité de la structure autonome. Le volet (11) comprend de plus un vérin (18) et une partie de volet (11b).

La partie de volet (11b) est destinée à obturer l'ouverture formée lorsqu'une cuve (6) est extraite. De cette manière, la partie de volet (11b) est sensiblement identique en forme géométrique à la trappe (10) extraction. La partie de volet (11b) est montée pivotante sur la plateforme supérieure (3). En effet, la partie de volet (11b) est de forme trapézoïdale et la grande base du trapèze est reliée de manière pivotante à la grande base de l'ouverture. Le vérin (18) est fixé, à une de ces extrémités à une extrémité inférieure du châssis (11a) et à l'autre extrémité sensiblement au centre de la partie de volet (11). De cette manière, lorsque la cuve (6) est extraite, le vérin (18) est automatiquement actionné et la partie de volet (11b) pivote pour venir obturer l'ouverture formée.

De cette manière, lors de l'utilisation, un utilisateur choisit le type de déchet sur la borne de tri (9) apparente et le dépose dans le réservoir destiné à recevoir les détritus. Ensuite le carrousel (5) tourne de manière à présenter la cuve (6) appropriée sous ladite borne de tri (9). Lorsque la cuve (6) appropriée est située sous la borne de tri (9), l'ouverture (9a) de la plateforme supérieure (3) s'ouvre et se referme afin de laisser tomber les déchets dans la cuve (6).

Lorsqu'une cuve (6) est pleine, l'information est détectée par des capteurs de niveau (non représentés) situés sur la plateforme supérieure (3) de la structure autonome, en regard des cuves (6) et est envoyée aux personnes concernées.

Comme cela apparaît de ce qui précède, l'invention fournit une installation (1) de collecte de déchets en apport volontaire nouvelle et inventive présentant de nombreux avantages par rapport aux solutions de la technique antérieure, en particulier elle fournit une installation (1) enterrée occupant une emprise foncière négligeable et pouvant être aménagée pour un usage public. En effet, la plateforme supérieure (3) est aménagée pour s'intégrer dans un environnement ambiant (2) et peut elle-même être aménagée avec des espaces verts ou autres. Elle est réalisée en une structure et matériau solide pour constituer une zone de roulement pour des camions bennes par exemple qui ont la charge, par des moyens élévateurs connus, d'extraire chaque cuve (6) pleine et de la replacer.

A titre indicatif, l'espace nécessaire à intégrer une telle installation (1) est de l'ordre de 36 à 60 m² dans une configuration moyenne comprenant 2 à 10 cuves (6) de collecte. C'est dire que cette surface est faible, ne détériore pas l'environnement extérieur (2) alors que la capacité de collecte est élevée. L'importance de l'installation (1) dépend bien sûr de son lieu d'affectation. Les travaux en extérieur sont limités à des terrassements pour la réception de l'installation (1) puis à l'agrément choisi sur la surface extérieure de la plateforme supérieure (3).

La solution de la présente invention est alors satisfaisante en son utilisation qui est simple et intuitive mais également par son esthétique et son côté sécuritaire.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Installation (1) de collecte sélective de déchets en apport volontaire, comprenant une structure autonome enterrée s'intégrant dans un paysage extérieur (2), ladite structure autonome étant constituée d'une plateforme supérieure (3), d'un cuvelage d'étanchéité et d'un fond (4), ledit fond (4) étant agencé avec des moyens réceptionnant une ou plusieurs cuves (6), de réception des déchets, d'une borne de collecte et de vidage, notamment une borne de tri (9) comprenant un boitier de commande et de gestion, lesdites cuves (6) sont disposées sur des moyens permettant de déplacer et de positionner dans un plan horizontal n'importe quelle desdites cuves (6) sous ladite borne de tri (9) ou bien sous lesdits moyens d'extraction desdites cuves (6), au moyen dudit boitier de commande et de gestion, ladite plateforme supérieure (3) étant située au niveau du sol, et pouvant être aménagée pour un usage public, ladite borne de tri (9) apparente permettant de décharger les déchets dans la ou lesdites cuves (6) et ladite structure comprenant des moyens autorisant l'extraction verticale desdites cuves (6) hors de la structure autonome et leur remise en position, pour leur vidage, **caractérisée en ce que** lesdits moyens sont constitués d'une trappe (10) d'extraction comprenant une face (10a) en regard des cuves (6), ladite face (10a) comprend des éléments (12) aptes à coopérer avec des moyens de prise et de préhension agencés sur chacune des cuves (6) à vider, lorsque ladite cuve (6) à vider se déplace sous ladite trappe (10) d'extraction, ladite trappe (10) d'extraction comprend de plus un dispositif de commande d'extraction (13) par lequel, lorsque l'on exerce une force de traction sur celui-ci, la trappe (10) d'extraction se soulève et permet ainsi d'extraire ladite cuve (6) à vider par la coopération desdits éléments (12) avec lesdits éléments de préhension (8).

2. Installation (1) de collecte sélective de déchets selon la revendication 1 **caractérisée en ce que** les éléments (12) aptes à coopérer avec des moyens de prise et de préhension agencés sur chacune des cuves (6), sont des éléments formant crochets.

3. Installation (1) de collecte sélective de déchets selon la revendication 1 **caractérisée en ce que** ledit dispositif de commande d'extraction (13) comprend une extrémité supérieure (13a) débordant vers l'extérieur de ladite structure autonome et une extrémité inférieure (13b) débordant vers l'intérieur de ladite structure, ladite extrémité supérieure (13a) comprenant des moyens (13c) de préhension et de commande de celle-ci et ladite extrémité inférieure (13b) comprenant une base (13d) et un ressort (15) agencé entre ladite base (13d) et ladite face (10a), ladite base (13d) comprenant des doigts (16) aptes se déplacer et pénétrer dans des orifices (17) que comprend lesdits éléments de préhension (8) de ladite cuve (6) à vider, au moyen de la compression du ressort (15) lorsqu'une force de traction est exercée sur ledit dispositif de commande d'extraction (13).

4. Installation (1) de collecte sélective de déchets selon la revendication 1 **caractérisée en ce que** lesdits moyens permettant de déplacer n'importe quelle desdites cuves (6) se présentent sous la forme d'un carrousel (5) motorisé permettant d'entrainer la rotation, au moyen dudit boitier de commande et de gestion, desdites cuves (6) autour d'un axe longitudinal perpendiculaire à ladite plateforme supérieure (3), chaque cuve (6) étant destinée à recevoir un type de déchets spécifique tel du verre ou bien du plastique.

5. Installation (1) de collecte sélective de déchets selon la revendication 1 **caractérisée en ce que** ladite plateforme supérieure (3) comprend des moyens de contrôle du remplissage desdites cuves (6).

6. Installation (1) de collecte sélective de déchets selon la revendication 1 **caractérisée en ce que** ladite borne de tri (9) apparente est agencée sur la plateforme supérieure (3) de telle sorte que lors du déplacement desdites cuves (6), ladite borne de tri (9) est située au dessus et au centre desdites cuves (6).

7. Installation (1) de collecte sélective de déchets selon la revendication 1 **caractérisée en ce que** ladite plateforme supérieure (3) comprend un volet (11) étanche de sécurité, composé d'une ou plusieurs parties, agencé de manière pivotante latéralement ou verticalement par rapport à ladite plateforme supérieure (3) et apte à passer d'une position de repos sensiblement verticale, à l'intérieur du cuvelage, à une position de verrouillage horizontale dans laquelle ledit volet (11) étanche de sécurité vient obturer l'ouverture formée lorsqu'une desdites cuves (6) est extraite pour son vidage et se trouve à l'extérieur de l'installation (1).

8. Installation (1) de collecte sélective de déchets selon la revendication 1 **caractérisée en ce que** ledit fond (7) desdites cuves (6) canalise des déchets liquides jusqu'à un bac de rétention pour que lesdits déchets liquides soient ensuite évacués par une pompe.

9. Installation (1) de collecte sélective de déchets selon la revendication 1 **caractérisée en ce que** ladite installation (1) comprend un accès spécifique « gros volumes », type galerie technique, agencé au dos de ladite borne de tri (9), permettant de décharger des déchets très encombrant, et aussi de permettre un accès direct aux services de secours et aux opérateurs chargés de l'entretien, pour une opération de débouchage par exemple.
